(19)

Europäisches
Patentamt
European
Patent Office
Office européen
des brevets

(11) **EP 2 424 120 A1**

(12) **EUROPEAN PATENT APPLICATION**

(43) Date of publication:
**29.02.2012 Bulletin 2012/09**

(51) Int Cl.:
***H04B 3/56*** *(2006.01)*

(21) Application number: **10174726.9**

(22) Date of filing: **31.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **ABB Research Ltd.**
**8050 Zürich (CH)**

(72) Inventors:
• **Smajic, Jasmin**
  **8165, Schöfflisdorf (CH)**
• **Spiess, Hermann**
  **5245, Habsburg (CH)**

• **Herzog, Heinz**
  **5742, Kölliken (CH)**
• **Poland, Jan**
  **5400, Baden (CH)**
• **Paice, Andrew**
  **5405, Dättwil (CH)**
• **Fritz, Oliver**
  **8005, Zürich (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **POWER LINE COMMUNICATION FILTER ARRANGEMENT**

(57) The present invention is concerned with an equivalent series inductance obtained via a magnetic field enhancement around a power line conductor 10 by surrounding the latter with a magnetic body 20 or ring core that has pronounced magnetic properties at line frequency as well as at high frequencies. In addition, a tuning unit 31, 32 in parallel to the equivalent series inductance is provided in order to adjust the properties of the filter arrangement and, in particular, to compensate for any sub-optimum magnetic properties. As a consequence, instead of ferrite, steel in the form of conventional laminated transformer steel may be used for the magnetic body.

**Fig. 2**

EP 2 424 120 A1

## Description

FIELD OF THE INVENTION

The invention relates to the field of Power Line Communication over power lines of high or medium voltage electric power transmission or distribution lines, and in particular to a filter arrangement for filtering communication signals transmitted over a section of a power line.

BACKGROUND OF THE INVENTION

In addition to their main role of transmitting electric energy, high or medium voltage power lines are also used to transmit high-frequency (HF) low-power communication and protection signals (40 kHz - 500 kHz) between substations of the power grid. To electromagnetically isolate the sections with the HF signal from the remaining part of the system, i.e. to prevent communication signal propagation into the connected substations, so-called line traps are used. These line traps are connected in series with the main circuit and consist of a main coil (inductor without magnetic core) adding a low inductance (0.2mH - 2mH) to the main circuit plus a so-called tuning unit (passive RLC circuit connected in parallel to the main coil). Main coil and tuning unit together constitute a tuned circuit presenting a high HF impedance (>600 $\Omega$ for e.g. L=1mH at 100 kHz) and very low 50 Hz impedance.

However, such line traps have several important drawbacks. A) The conductor of the main coil must be very massive (large cross section) as it has to conduct the nominal current. B) The main coil design must be mechanically very stable, as it has to withstand dynamic forces generated by the short circuit current (with significant DC component). C) Due to (a) and (b) the existing line trap designs are relatively large. A certain number of turns of an aluminum conductor are used to ensure the required level of inductance. A mechanical reinforcement of the main coil (isolating spacers, epoxy resin and metallic frame) is necessary to withstand the mechanical forces generated by the short-circuit current.

The patent US 6642806 proposes to replace conventional LC filters for HF frequency suppression in power systems because of the installation of these filters requiring the power conductor to be spliced and parts of the power system to be shut down. Instead, a "non-intrusive" installation and use of a toroid having a magnetic material with a given permeability and conductivity and surrounding a medium or high voltage conductor is suggested. The magnetic material filters very high frequency (VHF) and high frequency (HF) harmonics, and high frequency transients, by allowing power signals having frequency range between 50-60 Hz and by impeding signals having frequency range of 1 kHz to 1 MHz.

In order to avoid magnetic saturation of the ferrite body by the nominal 50-60 Hz current and corresponding reduction of the magnetic permeability and impedance at high frequencies, the filter toroid surrounds the three phase conductors of a three phase electric power system. In this configuration, large dielectric clearances between the three phases will require an enormously large toroid. Alternatively, each phase conductor may be surrounded by its own toroid.

DESCRIPTION OF THE INVENTION

It is therefore an objective of the invention to provide for more flexibility in the design of a filter arrangement for filtering power line communication signals. This objective is achieved by a filter arrangement and a use of a magnetic body according to the independent claims. Preferred embodiments are evident from the dependent patent claims, wherein the claim dependency shall not be construed as excluding further meaningful claim combinations.

According to the invention, a local increase in an equivalent series inductance is obtained via a magnetic field enhancement around a power line conductor by surrounding the latter with a magnetic body or ring core that has pronounced magnetic properties at line frequency as well as at high frequencies. In addition, a tuning unit in parallel to the equivalent series inductance is provided in order to tune, or adjust, the properties of the filter arrangement and, in particular, to compensate for any sub-optimum magnetic properties. As a consequence, instead of ferrite, steel in the form of conventional laminated transformer steel may be used for the magnetic body.

More specifically, a filter arrangement for filtering or blocking communication signals with a frequency above a network/line frequency and transmitted over a section of an AC or DC high voltage power line comprises both a magnetic body and a tuning unit. The magnetic body has the shape of a toroid or ring, or the shape of a hollow cylinder, and is made at least partially of a magnetically active material and surrounding the power line conductor such as to exhibit or produce an equivalent series inductance to the power line. The tuning unit is at least equivalent to a passive RC circuit electrically connected in parallel to the equivalent series inductance provided by the magnetic body. The filter arrangement is inductively coupling to the surrounded multi-phase or single line conductors and provides high impedance to any uncompensated or unshielded communication signal transmitted there in.

In a preferred variant of the invention, the magnetic body comprises a volume made of non-magnetic material such as air, for preventing a nominal current through the power line from saturating the magnetically active material of the magnetic body. The volume extends over an entire cross-section of the body parallel to the surrounded conductor. Accordingly, mutual compensation of nominal currents as in multi-phase AC systems is not a requirement for preventing saturation, and separating the magnetic body by two or more air gaps into distinct segments benefits the installation or mounting of the filter arrangement.

In further preferred variants, the non-magnetic volume is filled or stuffed with non-magnetic and mechanically hard material such as granite, which increases the resistance against the forces generated by very high short-circuit currents in the power line.

In an advantageous variant, the tuning unit is galvanically separated from, and inductively coupled to, the power line via the magnetic body operating as a transformer core and a secondary coil, in which the nominal line current induces a voltage that in turn drives a current through the elements of the tuning unit.

BRIEF DESCRIPTION OF THE DRAWINGS

The subject matter of the invention will be explained in more detail in the following text with reference to preferred exemplary embodiments illustrated in the attached drawings, of which:

Fig.1    shows a first filter arrangement according to the invention;
Fig.2    shows a filter arrangement with a hollow circular cylinder having an air gap; and
Fig.3    depicts a cross section of a hollow circular cylinder split into three segments.

The reference symbols used in the drawings, and their meanings, are listed in summary form in the list of designations. In principle, identical parts are provided with the same reference symbols in the figures.

DETAILED DESCRIPTION OF PREFERRED EMBODIMENTS

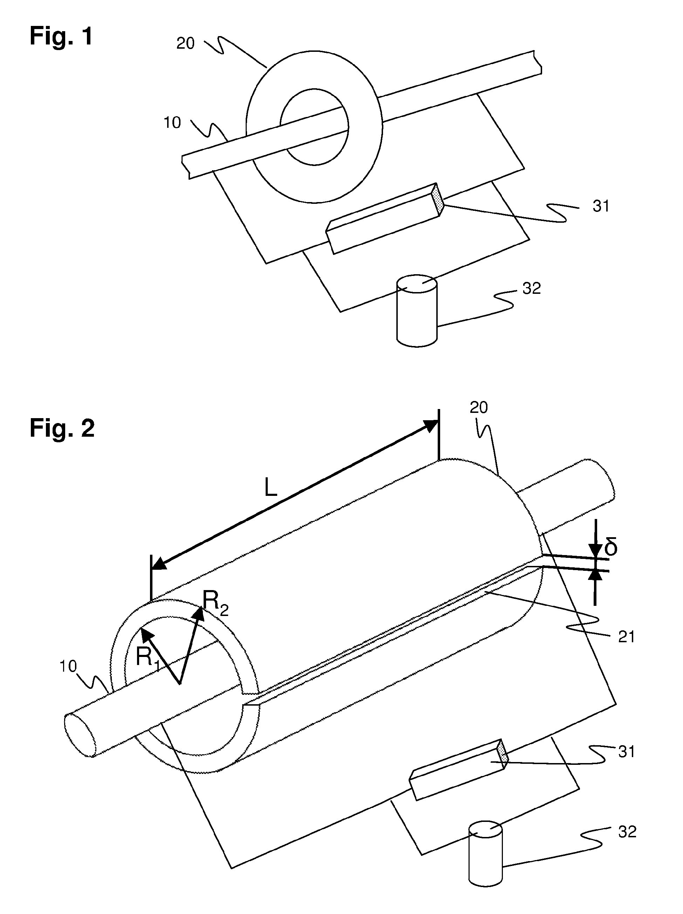

Fig.1 shows a filter arrangement according to the invention, comprising a line trap based on a locally increased inductance in series with a power line or busbar conductor 10, and produced by a magnetic body in the form of a bulk toroid or magnetic ring core 20 arranged around the line, as well as a tuning unit. The tuning unit comprises a resistance 31 and a capacitance 32 electrically connected in parallel to the line series inductance of the toroid. The toroid comprises a core made of a suitable magnetic material; its cross section can be of any shape, in particular circular or rectangular. In this configuration, the tuning unit may also be inductively coupled to the power line by means of a secondary coil around the toroid.

Fig.2 shows a filter arrangement with a magnetic body in the form of a hollow circular cylinder 20 having an air gap 21 of width δ. Likewise indicated are the inner and outer radii $R_1$ and $R_2$ of the hollow circular cylinder, and its length or height $L$. The cylinder essentially surrounds a conductor 10 carrying a current $I$.

For commercially available ferrite material, magnetic saturation starts at magnetic induction or flux densities of approximately 0.4 Tesla at room temperature. Hence, in order to prevent magnetic saturation, the ferrite cylinder of Fig.2 has been interrupted or split by introducing the air gap. To quantify the effect of the air gap on the saturation level of the ferrite cylinder Ampere's law is applied on a circular contour inside the cylinder and crossing the air gap. Assuming the ratio $\mu_{ferrite}/\mu_0$ to be very large, e.g. in excess of a value of 4000, leads to a simplified expression for the magnetic field in the air gap of

$$H_{air} \approx I / \delta.$$

Additionally, it is assumed that (a) the air gap is much smaller that the circumference of the ferrite cylinder (in this case the field in the gap is homogeneous), (b) the ferrite is not saturated (<0.4T), and (c) if the ferrite is not too hot (<100°C). The magnetic field and magnetic energy are then both confined to the air gap, and the inductance of the cylinder is

$$\mu_0 L(R_2-R_1)/\delta,$$

while the magnetic field is

$$B_{ferrite} \approx \mu_0 I / \delta.$$

A numerical example with $I$=400A, $R_1$=0.1m, $R_2$=0.5m, $B_{ferrite}$=0.4T, $L$=0.5m yields a consistent solution with an air gap δ of 1.26mm and an inductance of 0.2mH.

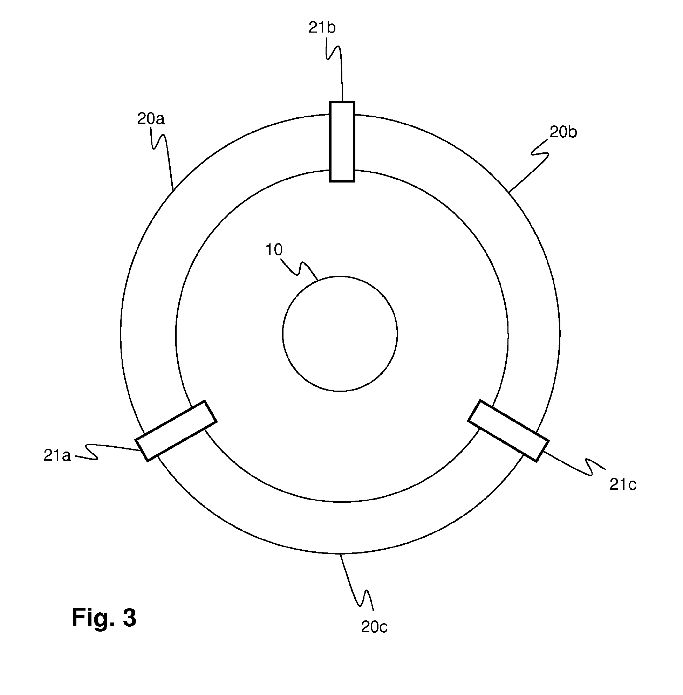

Fig.3 depicts a cross section of a ferrite cylinder split into three segments 20a, 20b, 20c or pieces by means of three longitudinal air gaps 21a, 21b, 21c. Since the structure must mechanically withstand very high short-circuit currents and forces, it has to be mechanically stable. For this purpose as well as to maintain constant air gap width, inserts made of granite or some other cheap and mechanically hard material are placed in the air gaps between the ferrite segments. A ferrite cylinder with two or more segments has advantages in view of fabrication, transport and handling, and is particularly suited for retrofit applications around existing conductors.

If necessary (chemically aggressive environments), the whole structure can be encapsulated by the glass-fiber reinforced epoxy resin. If the obtained inductance value is not high enough or if the size of the structure must be reduced, the current carrying conductor may itself form a winding with a few turns and thus traverse the ferrite cylinder several times. Higher inductance values are also obtained by connecting similar devices in series.

LIST OF DESIGNATIONS

10    power line
20    magnetic body
21    air gap
31    resistance
32    capacitance

**Claims**

1.  A filter arrangement for filtering communication signals transmitted over a section of a high or medium voltage power line (10), comprising

    - a magnetic body (20) made at least partially of a magnetically active material and surrounding the power line such as to exhibit an equivalent series inductance to the power line, and
    - a tuning unit (31, 32) equivalent to an RC circuit electrically connected in parallel to the equivalent series inductance.

2.  The filter arrangement according to claim 1, **characterized in that** the magnetic body includes a volume of non-magnetic material preventing a nominal current through the power line from saturating the magnetically active material of the magnetic body.

3.  The filter arrangement according to claim 2, **characterized in that** the volume of non-magnetic material comprises mechanically hard material.

4.  The filter arrangement according to claim 1, **characterized in that** the tuning unit is inductively coupled to the power line.

5.  The filter arrangement according to claim 1, **characterized in that** the magnetic material comprises ferrite or steel.

6.  The filter arrangement according to claim 1, **characterized in that** the magnetic body surrounds two or more phase conductors of an AC transmission common mode (CM) configuration.

7.  The filter arrangement according to claim 1, **characterized in that** a section of the power line forms one or more loops such as to multiply the magnetic field at a location of the magnetic core.

8.  A use of a hollow magnetic cylinder made of steel as the magnetic body in a filter arrangement according to any of the preceding claims.

**Fig. 1**

**Fig. 2**

**Fig. 3**

**Europäisches Patentamt**
**European Patent Office**
**Office européen des brevets**

# EUROPEAN SEARCH REPORT

Application Number

EP 10 17 4726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/085172 A1 (CERN YEHUDA [US]) 6 May 2004 (2004-05-06) * paragraphs [0005], [0013], [0014]; figure 1 * | 1-8 | INV.<br>H04B3/56 |
| A | US 6 642 806 B1 (GLINKOWSKI MIETEK T [US] ET AL) 4 November 2003 (2003-11-04) * abstract * | 1-8 | |
| A | EP 1 003 295 A2 (REGIOCOM GMBH [DE]) 24 May 2000 (2000-05-24) * abstract * | 1-8 | |

| | |
|---|---|
| | TECHNICAL FIELDS SEARCHED (IPC) |
| | H04B |

The present search report has been drawn up for all claims

| Place of search | Date of completion of the search | Examiner |
|---|---|---|
| The Hague | 15 October 2010 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 4726

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2010

| Patent document cited in search report | | Publication date | Patent family member(s) | | Publication date |
|---|---|---|---|---|---|
| US 2004085172 | A1 | 06-05-2004 | NONE | | |
| US 6642806 | B1 | 04-11-2003 | NONE | | |
| EP 1003295 | A2 | 24-05-2000 | CA | 2290046 A1 | 18-05-2000 |
| | | | US | 6177849 B1 | 23-01-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6642806 B